# EUROPÄISCHE PATENTANMELDUNG

(11) **EP 1 453 327 A1**
(43) Veröffentlichungstag der Anmeldung: **01.09.2004**
(21) Anmeldenummer: 03425124.9
(22) Anmeldetag: 27.02.2003
(51) Int. Cl.: H04Q 7/22, H04L 12/56, H04Q 7/38

(54) **Verfahren zur paketvermittelten Datenübertragung in einem Funkkommunikationssytem**

(71) Anmelder: SIEMENS AKTIENGESELLSCHAFT, 80333 München (DE); Siemens Mobile Communications S.p.A., 20126 Milano (IT)
(72) Erfinder: Gessner, Christina, 81373 München (DE); Parolari, Sergio, 20133 Milano (IT); Traynard, Jean-Michel, 81667 München (DE)

(57) **Zusammenfassung**

Wird entschieden, dass eine paketvermittelte Verbindung zwischen einer Mobilstation und einem ersten Netzknoten, bei der an die Mobilstation zu sendende Daten in einem Pufferspeicher des ersten Netzknotens zwischengespeichert werden, von dem ersten Netzknoten auf einen zweiten Netzknoten umgeschaltet werden soll, so erhält die Mobilstation einen Änderungsbefehl, eine Verbindung zu dem zweiten Netzknoten aufzubauen. Nach Erhalt des Änderungsbefehls wird die Übertragung von Daten, die im Pufferspeicher des ersten Netzknotens zwischengespeichert sind, an die Mobilstation fortgesetzt. Für die Mobilstation bestimmte Daten werden nicht mehr zum ersten Netzknoten übertragen.

## Beschreibung

Funkkommunikationssysteme dienen der Übertragung von Informationen, Sprache oder Daten, mit Hilfe von elektromagnetischen Wellen über eine Funkschnittstelle zwischen einer sendenden und einer empfangenden Funkstation. Ein Beispiel für ein Funkkommunikationssystem ist das bekannte GSM-Mobilfunknetz, sowie dessen Weiterentwicklung GPRS, dessen Architektur zum Beispiel in B. Walke, Mobilfunknetze und ihre Protokolle, Band 1, Teubner-Verlag Stuttgart, 1998, Seite 139 bis 151 und Seite 295 bis 311 beschrieben ist. Dabei ist zur Übertragung eines Teilnehmersignals jeweils ein durch ein durch einen schmalbandigen Frequenzbereich und einen Zeitschlitz gebildeter Kanal vorgesehen.

Zur Paketdatenvermittlung umfasst ein Funkkommunikationssystem, zum Beispiel ein GSM-Mobilfunknetz mit GPRS, eine Vielzahl von Paketdatendienstknoten (Serving GPRS Support Node SGSN), die untereinander vernetzt sind und die den Zugang zu einem Festdatennetz herstellen. Die Paketdatendienstknoten sind ferner mit Basisstationssteuerungen BSC verbunden. Jede Basisstationssteuerung ermöglicht wiederum eine Verbindung zu mindestens einer Basisstation (BTS) und nimmt die Verwaltung der funktechnischen Ressourcen der angeschlossenen Basisstationen vor. Eine solche Basisstation ist eine Sende/Empfangseinheit, die über eine Funkschnittstelle eine Nachrichtenverbindung zu Mobilstationen aufbauen kann.

Bei der paketvermittelten Datenübertragung erfolgt die Datenübertragung für mehrere Teilnehmer im Zeitmultiplex über ein- und denselben Kanal. Jeder Teilnehmer kann dabei auch mehrere Kanäle gleichzeitig belegen.

Für verschiedene Anwendungen, zum Beispiel Streaming-Dienste oder Conversational Services werden hohe Anforderungen bezüglich der Verzögerungszeit und des Datenverlustes bei der paketvermittelten Datenübertragung gestellt. Wegen der hohen Zeitanforderungen sind die bei der Paketdatenübermittlung üblicherweise eingesetzten Fehlerüberwachungsmechanismen, die vorsehen, dass ein Datenpaket, dessen Empfang nicht bestätigt wird, nochmals übertragen wird, für diese Anwendungen nicht uneingeschränkt anwendbar.

Daten für einen Teilnehmer, für den eine paketvermittelte Verbindung zwischen einer Mobilstation und einer Basisstation aufgebaut ist, werden vom Paketdatendienstknoten an die Basisstationssteuerung übertragen, der die betreffende Basisstation zugeordnet ist. In der Basisstationssteuerung werden diese Daten zwischengespeichert und von dort über die Basisstation an die Mobilstation übertragen. Erreicht dabei ein Datenpaket den Empfänger nicht, so kann es nochmals übertragen werden.

Muss die Verbindung eines Teilnehmers zu einer ersten Basisstation auf eine zweite Basisstation umgeschaltet werden und ist die zweite Basisstation einer anderen Basisstationssteuerung zugeordnet als die erste Basisstation, so muss sichergestellt werden, dass Daten, die bei der der ersten Basisstation zugeordneten Basisstationssteuerung zwischengespeichert sind, die Mobilstation noch erreichen, ehe diese auf die Verbindung mit der zweiten Basisstation umgeschaltet wird.

Es ist vorgeschlagen worden (siehe zum Beispiel 3GPP; Technical Specification Group GSM/EDGE; Radio Access Network; Seamless Support of Streaming Services in GERAN A/Gb Mode (Release 6) section 7.3), dieses Problem folgendermaßen zu lösen: Sobald netzseitig entschieden wird, dass die Verbindung einer Mobilstation zu einer ersten Basisstation auf eine zweite Basisstation umgeschaltet werden soll, die einer anderen Basisstationssteuerung zugeordnet ist, wird zunächst der Zwischenspeicher in der der ersten Basisstation zugeordneten Basisstationssteuerung geleert und es werden alle dort zwischengespeicherten Datenpakete an die Mobilstation übertragen. Anschließend wird ein Änderungsbefehl an die Mobilstation übertragen, in der ihr mitgeteilt wird, zu welcher zweiten Basisstation sie eine neue Verbindung aufbauen soll. Da die Entscheidung, eine Verbindung von der Mobilstation zu der ersten Basisstation auf die zweite Basisstation umzuschalten, häufig durch eine Verschlechterung der Funkbedingungen zwischen der Mobilstation und der ersten Basisstation begründet wird, kann es in diesem Fall vorkommen, dass sich die Funkbedingungen so stark verschlechtern, dass der Änderungsbefehl mit den Informationen über die zweite Basisstation, zu der die neue Verbindung aufgebaut werden soll, die Mobilstation nicht mehr erreicht. In diesem Fall wird die Verbindung abgebrochen.

Der Erfindung liegt das Problem zugrunde, ein Verfahren zur paketvermittelten Datenübertragung in einem Funkkommunikationssystem anzugeben, bei dem die Gefahr eines Abbruchs der Verbindung und gleichzeitig eines Datenverlustes bei einer Umschaltung einer paketvermittelten Verbindung von einem ersten Netzknoten auf einen zweiten Netzknoten reduziert wird.

Dieses Problem wird erfindungsgemäß gelöst durch ein Verfahren gemäß Anspruch 1. Weitere Ausgestaltungen der Erfindung gehen aus den Unteransprüchen hervor.

Besteht zwischen einer Mobilstation und einem ersten Netzknoten über eine Funkschnittstelle eine paketvermittelte Verbindung, wobei an die Mobilstation zu sendende Daten in einem Pufferspeicher des ersten Netzknotens zwischengespeichert werden und wird entschieden, dass die Mobilstation eine Verbindung zu einem zweiten Netzknoten aufbauen soll und die Verbindung mit dem ersten Netzknoten beenden soll, so werden für die Mobilstation bestimmte Daten nicht mehr zum ersten Netzknoten übertragen. Die Mobilstation erhält einen Änderungsbefehl mit der Aufforderung, eine Verbindung zu dem zweiten Netzknoten aufzubauen. Nach Erhalt des Änderungsbefehls wird die Übertragung von Daten, die im Pufferspeicher des ersten Netzknotens zwischengespeichert sind, an die Mobilstation fortgesetzt. Da die Mobilstation zuerst den Änderungsbefehl bekommt, mit dem ihr mitgeteilt wird, zu welchem neuen Netzknoten sie eine Verbindung aufbauen soll, und dann die zwischengespeicherten Daten übertragen werden, wird für den Fall, dass sich die Verbindung so stark verschlechtert, dass es zu einem Abbruch der Übertragung kommt, sichergestellt, dass die Mobilstation die Informationen bezüglich der neuen Verbindung, über die die Datenübertragung fortgesetzt werden soll, erhält. Sollte es zu einem Abbruch der Datenübertragung kommen, so tritt lediglich ein Datenverlust auf.

Es liegt im Rahmen der Erfindung, dass die Entscheidung, dass die Mobilstation eine Verbindung zu dem zweiten Netzknoten aufbauen soll, im ersten Netzknoten getroffen wird.

Vorzugsweise enthält der Änderungsbefehl eine Information darüber, dass in dem ersten Netzknoten Daten zwischengespeichert sind. Dabei ist es vorteilhaft, wenn die für die Mobilstation bestimmten im ersten Netzknoten zwischengespeicherten Daten vorrangig an die Mobilstation übertragen werden.

Es liegt im Rahmen der Erfindung, zwischen dem Erhalt des Änderungsbefehls und dem Aufbau der Verbindung zum zweiten Netzknoten, sowie dem Abbau der Verbindung zum ersten Netzknoten, eine vorgegebene Zeit verstreichen zu lassen, in der die zwischengespeicherten Daten übertragen werden. Vorzugsweise ist die Dauer der vorgegebenen Zeit abhängig von der Qualität der Funkschnittstelle zwischen dem ersten Netzknoten und der Mobilstation.

Gemäß einer Ausführungsform der Erfindung enthält der Änderungsbefehl eine Information darüber, welche Datenmenge, zum Beispiel wieviele Datenblöcke, im ersten Netzknoten zwischengespeichert ist. Die im ersten Netzknoten zwischengespeicherten Daten werden dann vorrangig an die Mobilstation übertragen. Die Mobilstation baut nach Erhalt der angekündigten Datenmenge die Verbindung zum ersten Netzknoten ab und die Verbindung zum zweiten Netzknoten auf.

Alternativ wartet die Mobilstation nach Erhalt des Änderungsbefehls ab, bis sie eine vorgegebene Datenmenge, zum Beispiel eine bestimmte Anzahl von Datenblöcken, empfangen hat und baut anschließend die Verbindung zum ersten Netzknoten ab und zum zweiten Netzknoten auf.

Die Umschaltung der Verbindung von der Mobilstation zum ersten Netzknoten auf den zweiten Netzknoten kann sowohl im Sinne eines Zellwechsels, als auch im Sinne einer Übergabeprozedur erfolgen. Als Zellwechsel wird in der Fachwelt der Vorgang bezeichnet, dass die Mobilstation einen Verbindungsaufbau zu dem zweiten Netzknoten durchführt, wobei sie Systeminformationen die den des zweiten Netzknoten betreffen zum Beispiel dessen Frequenz, über die Verbindung zum ersten Netzknoten abhört und für den Aufbau der neuen Verbindung verwendet.

Für die Übergabeprozedur, für die in der Fachwelt auch der Begriff "handover" gebräuchlich ist, ist dagegen netzseitig eine Vorbereitung erforderlich. Wird entschieden, dass eine Übergabeprozedur durchgeführt werden soll, so werden beim zweiten Netzknoten Ressourcen reserviert. Diese Ressourcen werden der Mobilstation mitgeteilt, so dass diese mit diesen Informationen die neue Verbindung aufbauen kann. Dazu werden Signalisierungsnachrichten ausgetauscht.

Das Verfahren ist insbesondere anwendbar in einem Funkkommunikationssystem entsprechend oder ähnlich dem GSMbeziehungsweise GERAN-Standard. In diesem Fall umfasst der erste Netzknoten eine erste Basisstation und eine erste Basisstationssteuerung. Die an die Mobilstation zu sendenden Daten werden in der ersten Basisstationssteuerung zwischengespeichert. Der zweite Netzknoten umfasst eine zweite Basisstation und eine zweite Basisstationssteuerung. Dabei unterscheiden sich die erste Basisstationssteuerung und die zweite Basisstationssteuerung.

Mit dem erfindungsgemäßen Verfahren wird die Gefahr eines Verbindungsabbruchs beim Umschalten einer Paketdatenverbindung zwischen einer Mobilstation und einem ersten Netzknoten auf einen zweiten Netzknoten reduziert, wobei gleichzeitig die Gefahr des Datenverlustes reduziert wird. Daher ist das Verfahren für alle Anwendungen geeignet, die hohe Anforderungen an die Verzögerungszeiten und Datenverluste stellen, wie zum Beispiel "Streaming-Dienste". Datenverluste können flexibel an die Funkbedingungen angepasst werden. Das Verfahren erfordert nur geringfügige Änderungen des GSM- beziehungsweise GERAN-Standards und ist somit in bestehenden Funkkommunikationssystemen ohne großen Aufwand zu implementieren.

Im Folgenden wird die Erfindung anhand eines Beispiels, das in den Figuren dargestellt ist, näher erläutert.

Figur 1 zeigt einen Ausschnitt aus der Architektur eines Funkkommunikationssystems.

Figur 2 zeigt ein Ablaufdiagramm für die Umschaltung einer Verbindung zwischen einer Mobilstation und einem ersten Netzknoten auf einen zweiten Netzknoten.

Figur 3 zeigt bei einer Umschaltung ausgetauschte Nachrichten.

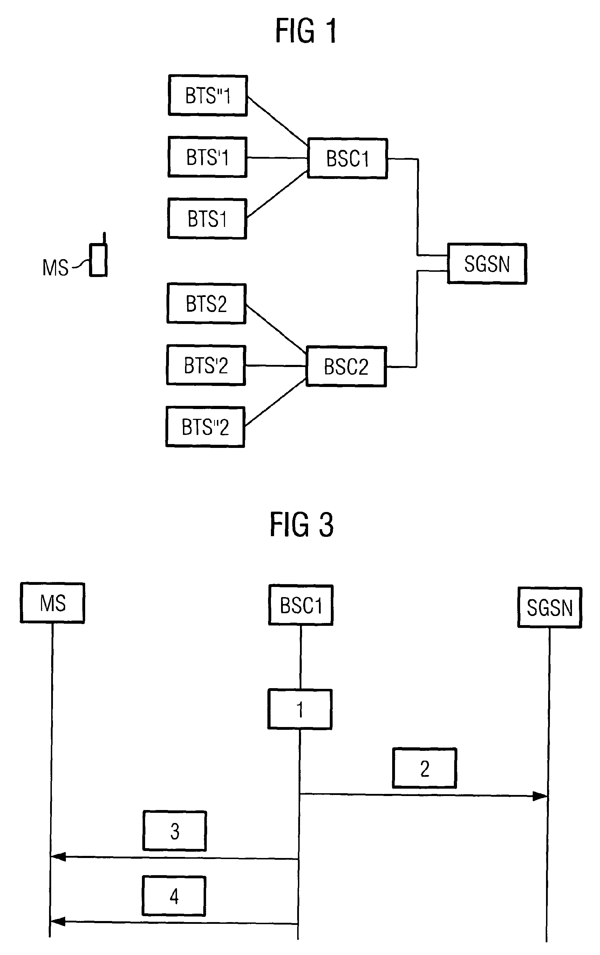

In einem Funkkommunikationssystem (siehe Figur 1) ist ein Paketdatendienstknoten SGSN vorgesehen, der eine Verbindung zwischen einem Datenfestnetz und einer ersten Basisstationssteuerung BSC1 und einer zweiten Basisstationssteuerung BSC2 darstellt. Jeder Basisstationssteuerung BSCi, i=1,2 sind Basisstationen BTSi, BTS'i, BTS"i zugeordnet. Zwischen einer Mobilstation MS und einer ersten Basisstation BTS1 ist eine Verbindung aufgebaut zur paketvermittelten Datenübertragung. Paketdaten, die für die Mobilstation MS bestimmt sind, werden von der Paketdatenvermittlungseinheit an die erste Basisstationssteuerung BSC1 übertragen. Dort werden die Paketdaten zwischengespeichert, ehe sie über die erste Basisstation BTS1 an die Mobilstation MS gesendet werden.

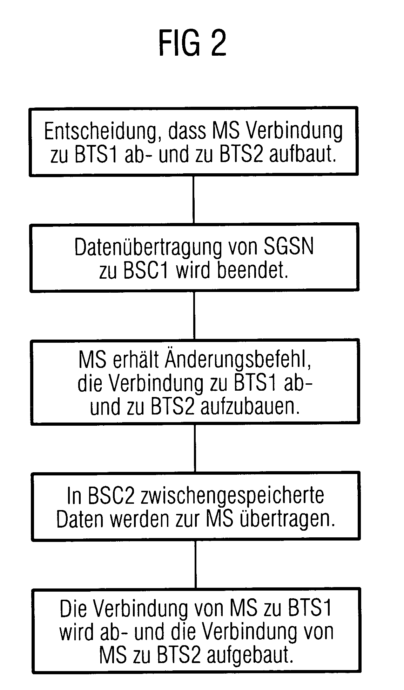

Verändern sich die Funkbedingungen an der Funkschnittstelle zwischen der Mobilstation MS und der ersten Basisstation BTS1 oder bewegt sich die Mobilstation MS von der ersten Basisstation BTS1 fort, so wird von der ersten Basisstationssteuerung BSC1 eine Entscheidung 1 getroffen, dass die Mobilstation MS die Verbindung zur ersten Basisstation BTS1 abbauen und zum Beispiel zu einer zweiten Basisstation BTS2 aufbauen soll (siehe Figur 2 und Figur 3). Daraufhin sendet die erste Basisstationssteuerung BSC1 eine erste Nachricht 2 an den Paketdatendienstknoten, mit der veranlasst wird, dass die Datenübertragung von dem Paketdatendienstknoten SGSN zu der ersten Basisstationssteuerung BSC1 beendet wird.

Nachfolgend wird ein Änderungsbefehl 3 von der ersten Basisstationssteuerung BSC1 an die Mobilstation MS gesendet. Der Änderungsbefehl 3 enthält einerseits die Aufforderung an die Mobilstation MS, die Verbindung zur ersten Basisstation BTS1 ab- und zur zweiten Basisstation BTS2 aufzubauen.

Andererseits enthält der Änderungsbefehl 3 einen Hinweis, dass in der ersten Basisstationssteuerung BSC1 noch Daten gespeichert sind, die für die Mobilstation MS bestimmt sind. Es folgt eine Datenübertragung 4 von der ersten Basisstationssteuerung BSC1 über die erste Basisstation BTS1 zur Mobilstation MS, in der die in der ersten Basisstationssteuerung BSC1 noch zwischengespeicherten Daten an die Mobilstation MS übertragen werden. Schließlich wird die Verbindung von der Mobilstation MS zur ersten Basisstation BTS1 ab- und die Verbindung von der Mobilstation MS zur zweiten Basisstation BTS2 aufgebaut.

Der Beginn des Abbaus der Verbindung von der Mobilstation MS zur ersten Basisstation BTS1 und des Aufbaus der Verbindung von der Mobilstation MS zur zweiten Basisstation BTS2 wird zum Beispiel durch einen Zeitgeber gesteuert, der bei Erhalt der Änderungsnachricht in der ersten Basisstationssteuerung gestartet wird.

## Patentansprüche

1. Verfahren zur paketvermittelten Datenübertragung in einem Funkkommunikationssystem,
- bei dem zwischen einer Mobilstation (MS) und einem ersten Netzknoten (BTS1, BSC1) über eine Funkschnittstelle eine paketvermittelte Verbindung besteht, wobei an die Mobilstation (MS) zu sendende Daten in einem Pufferspeicher des ersten Netzknotens (BTS1, BSC1) zwischengespeichert werden,
- bei dem entschieden wird, dass die Mobilstation (MS) eine Verbindung zu einem zweiten Netzknoten (BSC2,BTS2) aufbauen soll, und die Verbindung mit dem ersten Netzknoten (BTS1, BSC1) beenden soll,
- bei dem für die Mobilstation (MS) bestimmte Daten nicht mehr zum ersten Netzknoten (BTS1, BSC1) übertragen werden,
- bei dem die Mobilstation (MS) einen Änderungsbefehl erhält, eine Verbindung zu dem zweiten Netzknoten (BTS2,BSC2) aufzubauen,
- bei dem nach Erhalt des Änderungsbefehls die Übertragung von Daten, die im Pufferspeicher des ersten Netzknotens (BTS1, BSC1) zwischengespeichert sind, an die Mobilstation (MS) fortgesetzt wird.

2. Verfahren nach Anspruch 1,
bei dem die Entscheidung, dass die Mobilstation (MS) eine Verbindung zu dem zweiten Netzknoten (BTS2, BSC2) aufbauen soll, im ersten Netzknoten (BTS1, BSC1) getroffen wird.

3. Verfahren nach Anspruch 1 oder 2,
bei dem der Änderungsbefehl eine Information darüber enthält, dass im ersten Netzknoten (BTS1, BSC1) Daten zwischengespeichert sind.

4. Verfahren nach einem der Ansprüche 1 bis 3,
bei dem zwischen dem Erhalt des Änderungsbefehls und dem Aufbau der Verbindung zum zweiten Netzknoten (BTS2,BSC2) sowie dem Abbau der Verbindung zum ersten Netzknoten
(BTS1, BSC1) eine vorgegebene Zeit verstreicht, in der die zwischengespeicherten Daten übertragen werden.

5. Verfahren nach Anspruch 4,
bei dem die vorgegebene Zeit abhängig von der Qualität der Funkschnittstelle zwischen dem ersten Netzknoten (BTS1, BSC1) und der Mobilstation (MS) ist.

6. Verfahren nach Anspruch 3,
- bei dem der Änderungsbefehl eine Information darüber enthält, welche Datenmenge im ersten Netzknoten (BTS1, BSC1) zwischengespeichert ist,
- bei dem die im ersten Netzknoten (BTS1, BSC1) zwischengespeicherten Daten vorrangig an die Mobilstation (MS) übertragen werden,
- bei dem die Mobilstation (MS) nach Erhalt der angekündigten Datenmenge die Verbindung zum ersten Netzknoten (BTS1, BSC1) ab- und die Verbindung zum zweiten Netzknoten (BTS2,BSC2) aufbaut.

7. Verfahren nach Anspruch 3,
bei dem die Mobilstation (MS) nach Erhalt des Änderungsbefehls abwartet, bis sie eine vorgegebene Datenmenge empfangen hat und anschließend die Verbindung zum ersten Netzknoten (BTS1, BSC1) ab und zum zweiten Netzknoten (BTS2,BSC2) aufbaut.

8. Verfahren nach einem der Ansprüche 1 bis 7,
bei dem die Umschaltung der Verbindung von der Mobilstation (MS) zum ersten Netzknoten (BTS1, BSC1) auf den zweiten Netzknoten (BTS2,BSC2) im Sinne eines Zellwechsels oder einer Übergabeprozedur erfolgt.

9. Verfahren nach einem der Ansprüche 1 bis 8,
- bei dem der erste Netzknoten eine erste Basisstation (BTS1) und eine erste Basisstationssteuerung (BSC1) umfasst, wobei an die Mobilstation (MS) zu sendende Daten in der ersten Basisstationssteuerung (BSC1) zwischengespeichert werden,
- bei dem der zweite Netzknoten eine zweite Basisstation (BTS2) und eine zweite Basisstationssteuerung (BSC2) umfasst, wobei sich die erste Basisstationssteuerung (BSC1) und die zweite Basisstationssteuerung (BSC2) unterscheiden.
